# EUROPEAN PATENT SPECIFICATION

(11) **EP 1 703 145 B1**
(45) Date of publication and mention of the grant of the patent: **14.05.2008**
(21) Application number: 06111251.2
(22) Date of filing: 16.03.2006
(51) Int. Cl.: F16B 7/18, F16B 37/04

(54) **Connection device to connect a covering profile and a frame profile in door or window frames and suchlike**
Verbindungsvorrichtung zur Verbindung eines Deckprofils mit einem Rahmenprofil in Tür- oder Fensterrahmen und dergleichen
Dispositif de connection d'un profilé de recouvrement avec un profilé de cadre pour des cadres de porte ou de fenêtre et similaires

(30) Priority: 17.03.2005 IT MI20050442
(43) Date of publication of application: 20.09.2006
(73) Proprietor: Ferro Group International S.r.l., 33035 Martignacco (UD) (IT)
(72) Inventor: Ferro, Vittorino, 33035, Martignacco (UD) (IT)
(74) Representative: Petraz, Davide Luigi

(56) References cited:
- EP-A- 0 399 638
- US-A1- 2002 044 824

## Description

### FIELD OF THE INVENTION

The present invention concerns a connection device to make the connection between a covering profile, for example made of wood or other enhancing material, and a frame profile, for example made of metal, in door or window frames and suchlike.

### BACKGROUND OF THE INVENTION

As is known, at present, in order to make the connection of the covering profile, generally made of wood, and a frame profile, normally made of aluminum, it is necessary to have recourse to operations that are particularly complex, and to use mechanisms that require long and laborious assembly operations.

Moreover, in order to make the connection, generally, a common continuous longitudinal milling is provided on the wooden covering profile, which has the disadvantage that it structurally weakens the wooden profile, precisely because the milling develops over the whole length of the wooden profile, which in itself has a very limited thickness.

Another disadvantage of known connection devices is the fact that in order to make the anchorage of the covering profile on the frame profile, at present screws are used, and therefore it is necessary to have recourse to tools made for the purpose, in order to tighten them and screw them in, with relatively long assembly times.

From the EP-A-0 399 638 it is known an adjustable bracket which incorporates a fixed base member to be secured to a secondary member by means of a fastening element, constitutes by a metal screw screwed, in the secondary member. The base member is provided with a large aperture, through which freely passes the fastening element with wide play. In fact, the large aperture is dimensioned to permit wide movement of the base member in mutual perpendicular directions relative to the fastening element, so that the same base member can be positioned with respect to the secondary member. A slotted plate is mounted adjacent to the base member and is slidable relative thereto. However, an upstanding edge is also provided to restrict movement of the slotted plate in a linear direction relative to the base member. The slotted plate has an elongate slot which is inclined relative to the direction of sliding and is cooperable with the aperture of the base member so as to define therewith a common window of variable position. The fastening element also passes through the elongate slot, so that it passes with wide play through the common window, for securing the base member to the secondary member. This adjustable bracket is able to be used to support and align two pieces - the fixed base member and the secondary member -, e.g. a two-piece propeller shaft of an automobile at its centre bearing position, and is not adapted to make an easy mountable and dismountable connection between a covering profile, for example made of wood or other enhancing material, and a frame profile, for example made of metal, in door or window frames and suchlike.

The technical problem which the present invention sets itself to solve is precisely to eliminate the disadvantages described above, achieving a connection device between a covering profile and a frame profile in door or window frames and suchlike, which does not excessively weaken the structure of the covering profile and which at the same time allows to perform the coupling of the two profiles simply and quickly, without needing to use screws or other utensils, and without running the risk of the clamping means accidentally becoming dis-engaged.

Within the framework of the technical problem set forth above, a first purpose of the present invention is to achieve a connection device which will allow to make workings on the wooden covering profile, usually made of wood, in limited zones thereof, thus radically eliminating the risk of weakening the profile itself, even in the case of very limited thicknesses, for example in the order of about ten millimeters.

Another purpose of the present invention is to achieve a connection device that allows to drastically reduce the assembly times, but without prejudicing in any way the stability and reliability of the clamping.

Another purpose of the present invention is to achieve a connection device which, due to its particular constructional characteristics, is able to give the widest guarantees of reliability and safety in use and which, furthermore, is competitive from a purely economic point of view.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with said purposes, a connection device according to the present invention to connect a covering profile and a frame profile in door or window frames and suchlike, is of the type wherein said frame profile is shaped so as to define a longitudinal seating which said covering profile is able to face and be connected with. Moreover, a plurality of connection blocks are able to achieve the connection between said covering profile and said frame profile. To be more exact, each of said connection blocks is shaped so as to define at a first end a clamping element, able to be inserted into said longitudinal seating, and at a second end, opposite said first end, a coupling element, able to be coupled with said covering profile.

The main characteristic of the connection device according to the present invention is that said covering profile, on one surface able to be coupled with said frame profile, comprises a plurality of discontinuous slits, each of which is able to accommodate a coupling element of one of said connection blocks.

In this way, the plurality of slits, each of which can be disposed both parallel to the opposite longitudinal seating of the frame profile, and also orthogonal thereto, weakens the covering profile much less than what happens in the state of the art, with undeniable advantages for the structure of the covering profile itself.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of a connection device according to the present invention, with the elements of which it consists in an exploded view;

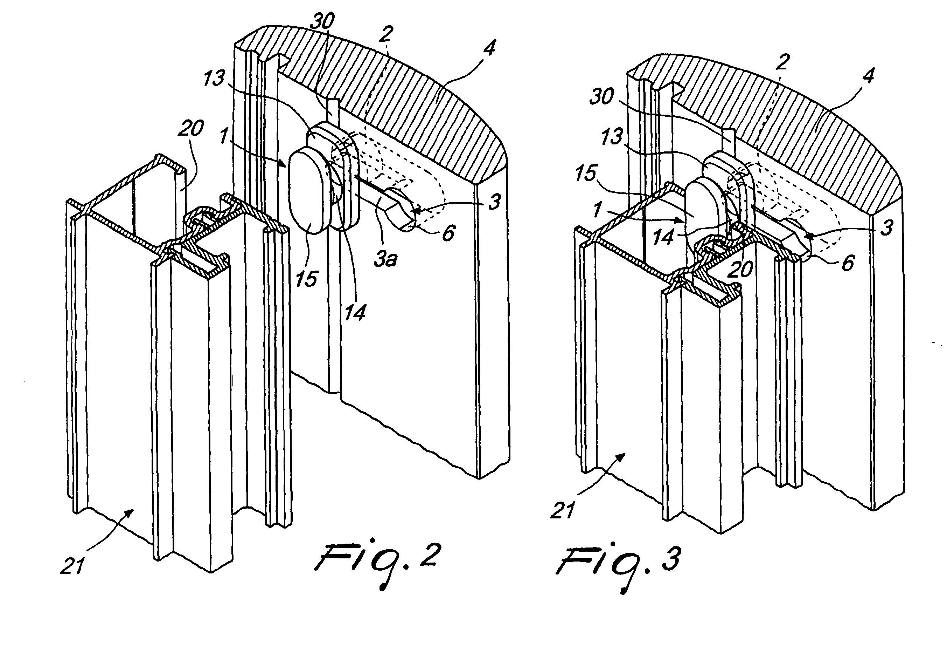

- fig. 2 is a schematic and perspective view of the connection device in fig. 1, with a connection block associated with the covering profile;
- fig. 3 is a schematic view of the step of inserting the connection block of fig. 2 into the frame profile;

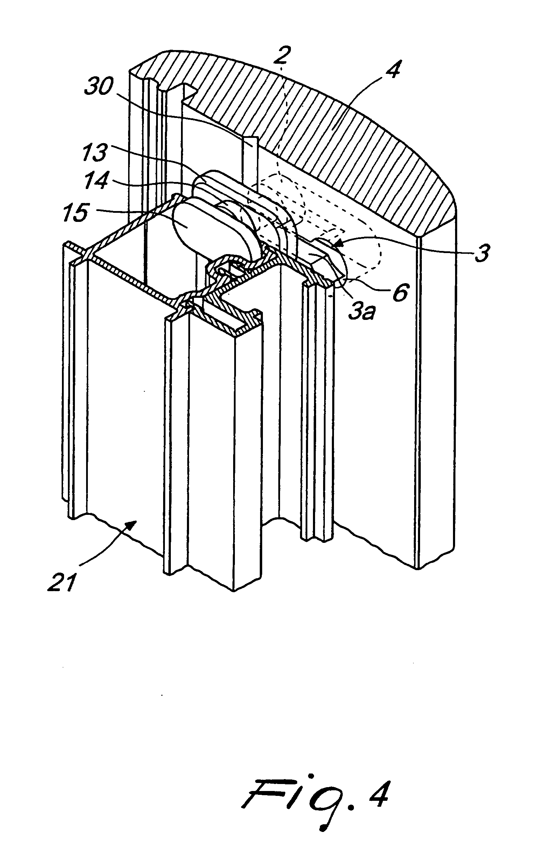

- fig. 4 is a schematic perspective view of the connection block in fig. 3 in the clamping position;
- figs. 5, 6 and 7 show, in cross section with respect to the development of the covering profile, the different positions of the connection block in fig. 2;
- figs. 8, 9 and 10 show a front view of the different positions of a connection block on the covering profile;
- fig. 11 is a schematic sectioned view of the portion of a door or window frame, highlighting the connection device according to the present invention in the clamping position.

### DETAILED DESCRIPTION OF A PREFERENTIAL FORM OF EMBODIMENT

With reference to the attached figures, a connection device according to the present invention between a covering profile 4 and a frame profile 21 in door or window frames and suchlike, comprises a plurality of connection blocks 1, each of which comprises, at a first end, a coupling element 2 which can be inserted into a slit 3, made in the surface of the covering profile 4 which, during use, is positioned against the frame profile 21.

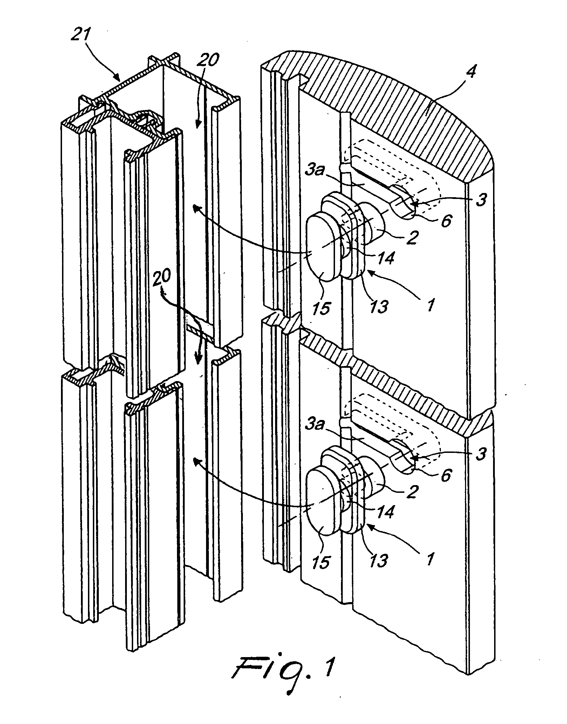

The different slits 3 (fig. 1), made in the covering profile 4, are much more advantageous than a single, long longitudinal slit made in known covering profiles. The distance between two contiguous slits 3 is chosen according to the clamping requirements of the two profiles 4 and 21 and can vary between a few centimeters and several tens of centimeters.

Moreover, each slit 3 can be made both with a transverse development with respect to that of a covering profile 4, as shown in the drawings, and also with a longitudinal development.

Each slit 3 has a substantially oblong shape and comprises a rectilinear zone, with a substantially T shaped cross section, with wings 3a, and a widened zone 6, substantially cylindrical, provided in correspondence with one end.

The coupling element 2 of the connection block 1 preferably has a substantially flattened cylindrical conformation and is sized so that it can be inserted axially into the widened zone 6 of the slit 3 and subsequently translated laterally, by means of sliding, below the wings 3a, in the rectilinear zone with the T-shaped section of the slit 3.

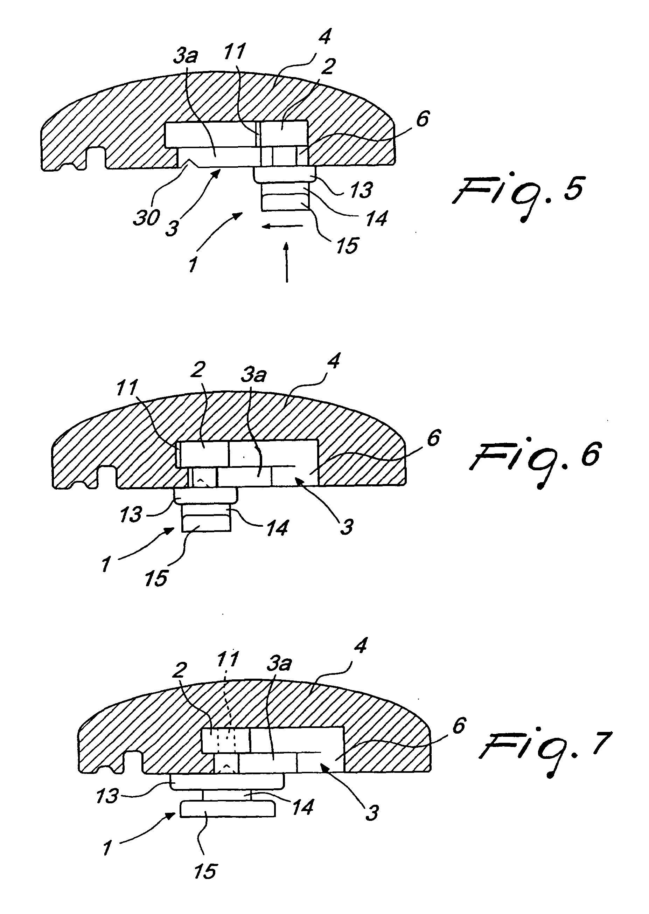

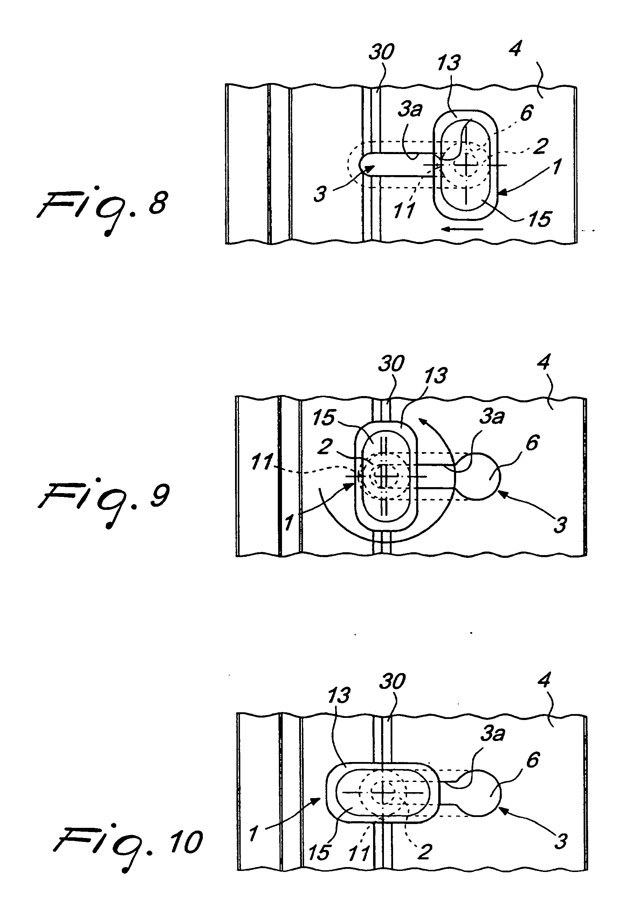

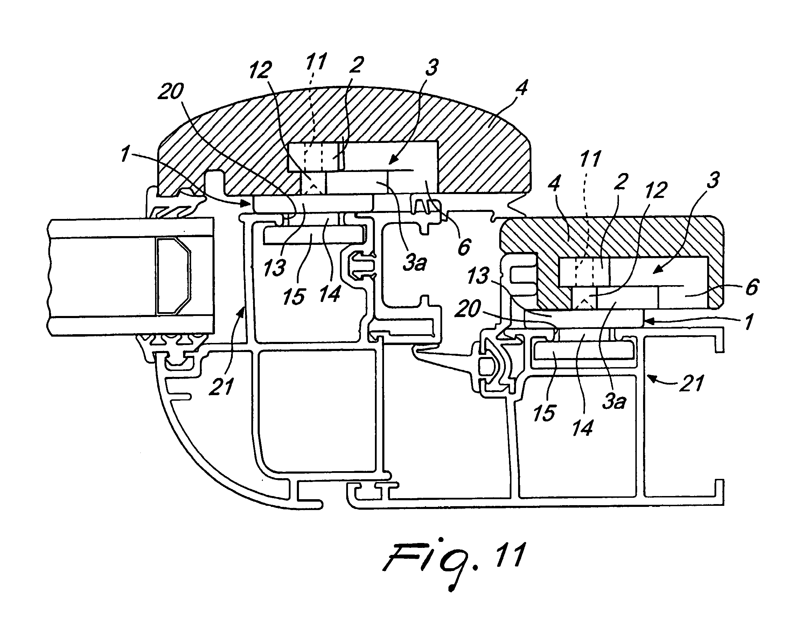

Moreover, the coupling element 2 has a cam portion 11 (figs. 5 to 11) which is positioned in such a manner as to function as a stop element in the clamping position, as will be clarified hereafter.

The coupling element 2 is connected by means of a rod 12 with a drive portion 13, with a substantially flattened conformation and having at least two opposite plane flanks so as to engage with a tool, of the known type and not shown in the drawings.

The rod 12 has a diameter and an axial development such that it can be positioned with precision between the wings 3a of the slit 3, so as to obtain a stable clamping of the connection block 1 on the covering profile 4.

The drive portion 13 is able to be positioned in contact with the inner surface of the covering profile 4 which is able to be coupled with the frame profile 21; this surface, during use, will not be visible.

Moreover, the drive portion 13, on the opposite side with respect to that from which the rod 12 extends, is connected by means of an appendix 14 to a clamping element 15. The latter preferably has a substantially oval conformation, with two parallel and rectangular flanks, with a width such as to allow it to be inserted into a longitudinal seating 20 present in the frame profile 21. The clamping element 15 is clamped in the longitudinal seating 20 in a substantially known manner, that is, by rotation through 90°, which causes its rounded ends to be inserted inside said longitudinal seating 20, thus achieving a stable clamping.

The covering profile 4 is connected to the frame profile 21 as follows.

As shown in figs. 1 and 5 to 10, firstly it is provided to insert each coupling element 2 of a connection block 1 into a corresponding slit 3. Then the connection block 1 is made to translate laterally so as to take it into correspondence with the opposite end to the end including the widened zone 6.

When this positioning of one or more connection blocks 1 on the covering profile 4 has been completed, the clamping element 15 of each connection block 1 is introduced into the longitudinal seating 20 of the frame profile 21. Then, by means of the drive portion 13, a rotation is made, substantially by 90°, of each connection block 1. In this way the rounded ends of each clamping element 15 engage with the edges of the longitudinal seating 20, and the cam 11 provided on the coupling element 2 practically thrusts on the walls of the slit 3, clamping the connection block 1 in this position which thus makes the connection stable.

From the above it can be seen how the connection device according to the present invention achieves the purposes proposed. In particular we underline the fact that, in order to couple the covering profile 4 with the frame profile 21, it is possible to provide, at distanced points, the slits 3 which, being made on discontinuous segments, do not create any weakening of the structure of the covering profile 4 and which, furthermore, give the possibility of performing the rotation of the connection block manually, which is stably positioned in pre-selectable points along the longitudinal development of the covering profile 4.

Moreover, from the above it can be seen how the invention achieves the purposes proposed, and in particular we underline the fact that a connection is made available between a covering profile and frame profile in door or window frames and suchlike, which is particularly functional and able to perform with great stability the coupling of the covering profile without having to have recourse to complex apparatuses for assembly.

Moreover, all the constructional details can be replaced by other, technically equivalent elements. For example, instead of a flattened cylindrical shape, the coupling element 2 can be spherical or semi-spherical.

Moreover, the materials used, and also the contingent sizes and shapes, can be any, according to requirements.

It is also clear that, although the present invention has been described with reference to some specific examples, a person of skill in the art shall certainly be able to achieve many other equivalent forms of connection devices, having the characteristics as set forth in the claims and hence all coming within the field of protection defined thereby.

## Claims

1. Connection device to connect a covering profile (4) made of wood or other enhancing material with a frame profile (21) in door or window frames and suchlike, wherein said frame profile (21) is shaped so as to define a longitudinal seating (20), which said covering profile (4) is able to face and be connected with, wherein a plurality of connection blocks (1) are able to achieve the connection between said covering profile (4) and said frame profile (21), and wherein each of said connection blocks (1) is shaped so as to define, at a first end thereof, a clamping element (15), able to be inserted into said longitudinal seating (20), and at a second end thereof, opposite said first end, a coupling element (2) able to be coupled with said covering profile (4), **characterized in that** said covering profile (4), on one surface able to be coupled with said frame profile (21), comprises a plurality of discontinuous slits (3), each of which is able to accommodate a coupling element (2) of one of said connection blocks (1), **in that** said slits (3) are made on discontinuous segments of said covering profile (4), substantially without create any weakening of the structure of said covering profile (4), and **in that** said slits (3) give the possibility of performing the rotation of each connection block (1) manually, which is stably positioned in pre-selectable points along the longitudinal development of said covering profile (4).

2. Connection device as in claim 1, **characterized in that** each slit (3) is made with a transverse or longitudinal development with respect to that of said covering profile (4).

3. Connection device as in claim 1 or 2, **characterized in that** each slit (3) is substantially oblong in shape and comprises a rectilinear zone having a substantially T shaped cross section.

4. Connection device as in claim 3, **characterized in that** each slit (3) also comprises a widened zone (6) made in correspondence with one end of said rectilinear zone.

5. Connection device as in claim 4, **characterized in that** said widened zone (6) is substantially cylindrical in shape.

6. Connection device as in claim 5, **characterized in that** each coupling element (2) has a substantially cylindrical, spherical or semi-spherical conformation, and is sized so as to be able to be first inserted axially into said widened zone (6) of the slit (3), and subsequently translated laterally, by sliding, in said rectilinear zone of the same slit (3).

7. Connection device as in claim 5 or 6, **characterized in that** each coupling element (2) comprises a cam portion (11) positioned so as to function as a stop element in the clamping position.

8. Connection device as in any claim from 5 to 7, **characterized in that** said coupling element (2) is connected, by means of a rod (12), to a drive portion (13) with a substantially flattened conformation.

9. Connection device as in claim 8, **characterized in that** said rod (12) has a diameter and axial development such as to be positioned with precision between two wings (3a) of said slit (3), so as thus to obtain a stable clamping of said connection block (1) on said covering profile (4).

10. Connection device as in claim 8 or 9, **characterized in that** said drive portion (13), on the part opposite that from which said rod (12) extends, is connected to said clamping element (15).

## Patentansprüche

1. Verbindungsvorrichtung zum Verbinden eines Deckprofils (4) aus Holz oder einem sonstigen Verstärkungsmaterial mit einem Rahmenprofil (21) an Tür- oder Fensterrahmen und dergleichen, wobei das Rahmenprofil (21) derart gestaltet ist, dass es eine Längsaufnahme (20) bildet, der das Deckprofil gegenübertreten und mit dem es verbunden werden kann, wobei mehrere Verbindungsblöcke (1) die Herstellung der Verbindung zwischen dem Deckprofil (4) und dem Rahmenprofil (21) gestatten, und wobei jeder der Verbindungsblöcke (1) derart gestaltet ist, dass er an einem ersten Ende ein Klemmelement (15) zum Einfügen in die Längsaufnahme (20) und an einem dem ersten Ende gegenüberliegenden zweiten Ende ein Koppelelement (2) zum Ankoppeln an das Deckprofil (4) aufweist, **dadurch gekennzeichnet, dass** das Deckprofil (4), das an einer Fläche an das Rahmenprofil (21) ankoppelbar ist, mehrere einzelne Schlitze (3) aufweist, deren jeder die Aufnahme eines Koppelelementes (2) eines der Verbindungsblöcke (1) gestattet, dass die Schlitze (3) in einzelnen Segmenten des Deckprofils (4) ausgebildet sind, ohne die Struktur des Deckprofils (4) wesentlich zu schwächen, und dass die Schlitze (3) eine manuelle Drehung jedes Verbindungsblocks (1) gestatten, wobei die Verbindungsblöcke an vorgewählten Stellen in der Längserstreckung des Deckprofils (4) stabil positioniert sind.

2. Verbindungsvorrichtung nach Anspruch 1, **dadurch gekennzeichnet, dass** jeder Schlitz (3) mit einer Quer- oder Längserstreckung bezüglich der Erstreckung des Deckprofils (4) ausgebildet ist.

3. Verbindungsvorrichtung nach Anspruch 1 oder 2, **dadurch gekennzeichnet, dass** jeder Schlitz (3) im wesentlichen länglich geformt ist und einen geradlinigen Bereich mit im wesentlichen T-förmigem Querschnitt aufweist.

4. Verbindungsvorrichtung nach Anspruch 3, **dadurch gekennzeichnet, dass** jeder Schlitz (3) ferner einen erweiterten Bereich (6) aufweist, der entsprechend einem Ende des geradlinigen Bereichs ausgebildet ist.

5. Verbindungsvorrichtung nach Anspruch 4, **dadurch gekennzeichnet, dass** der erweiterte Bereich (6) im wesentlichen zylindrisch geformt ist.

6. Verbindungsvorrichtung nach Anspruch 5, **dadurch gekennzeichnet, dass** jedes Koppelelement (2) im wesentlichen zylindrisch, kugelförmig oder halbkugelförmig gestaltet und so bemessen ist, dass es sich zunächst axial in den erweiterten Bereich (6) des Schlitzes (3) einführen und danach seitlich in dem geradlinigen Bereich des gleichen Schlitzes (3) verschieben lässt.

7. Verbindungsvorrichtung nach Anspruch 5 oder 6, **dadurch gekennzeichnet, dass** jedes Koppelelement (2) einen Nockenabschnitt (11) aufweist, der so angeordnet ist, dass er in der Klemmposition als Anschlag dient.

8. Verbindungsvorrichtung nach einem der Ansprüche 5 bis 7, **dadurch gekennzeichnet, dass** das Koppelelement (2) über eine Stange (12) mit einem im wesentlichen flach gestalteten Antriebsteil (13) verbunden ist.

9. Verbindungsvorrichtung nach Anspruch 8, **dadurch gekennzeichnet, dass** die Stange (12) in ihrem Durchmesser und ihrer axialen Erstreckung so ausgebildet ist, dass sie sich genau zwischen zwei Flanken (3a) des Schlitzes (3) anordnen lässt, um eine stabile Halterung des Verbindungsblocks (1) an dem Deckprofil (4) zu erzielen.

10. Verbindungsvorrichtung nach Anspruch 8 oder 9, **dadurch gekennzeichnet, dass** der Antriebsteil (13) an dem von der Stange (12) abgewandten Teil mit dem Klemmelement (15) verbunden ist.

## Revendications

1. Dispositif d'assemblage d'un profilé de recouvrement (4) en bois ou autre matériau décoratif, avec un profilé d'encadrement (21) pour des cadres de portes ou de fenêtres et similaires, dans lequel la forme dudit profilé d'encadrement (21) est étudiée pour définir un siège longitudinal (20), face auquel peut être placé et assemblé ledit profilé de recouvrement (4), dans lequel une pluralité de blocs d'assemblage (1) permet d'assembler ledit profilé de recouvrement (4) audit profilé d'encadrement (21), et dans lequel la forme de chacun desdits blocs d'assemblage (1) est étudiée pour définir, à une première de leurs extrémités, un élément de blocage (15) pouvant être introduit dans ledit siège longitudinal (20) et, à une seconde de leurs extrémités opposée à ladite première extrémité, un élément d'accouplement (2) pouvant être accouplé audit profilé de recouvrement (4), dispositif **caractérisé en ce que** ledit profilé de recouvrement (4), sur une face pouvant être accouplée audit profilé d'encadrement (21), comprend une pluralité de fentes discontinues (3) pouvant recevoir chacune un élément d'accouplement (2) de l'un desdits blocs d'assemblage (1), **en ce que** lesdites fentes (3) sont ménagées sur des segments discontinus dudit profilé de recouvrement (4), sans affaiblir sensiblement la structure de celui-ci, et **en ce que** lesdites fentes (3) offrent la possibilité de faire tourner manuellement chaque bloc d'assemblage (1), placé en position stable en des points prédéfinissables le long du développement longitudinal dudit profilé de recouvrement (4).

2. Dispositif d'assemblage selon la revendication 1, **caractérisé en ce que** chaque fente (3) suit un développement transversal ou longitudinal par rapport à celui dudit profilé de recouvrement (4).

3. Dispositif d'assemblage selon la revendication 1 ou 2, **caractérisé en ce que** chaque fente (3) est de forme sensiblement oblongue et comprend une zone rectiligne dont la section transversale est sensiblement en forme de T.

4. Dispositif d'assemblage selon la revendication 3, **caractérisé en ce que** chaque fente (3) comprend également une zone élargie (6), ménagée en correspondance avec l'une des extrémités de ladite zone rectiligne.

5. Dispositif d'assemblage selon la revendication 4, **caractérisé en ce que** ladite zone élargie (6) est de forme sensiblement cylindrique.

6. Dispositif d'assemblage selon la revendication 5, **caractérisé en ce que** chaque élément d'accouplement (2) est de forme sensiblement cylindrique, sphérique ou semi-sphérique, et dimensionné de manière à pouvoir être d'abord introduit axialement dans ladite zone élargie (6) de la fente (3), puis déplacé en translation latérale par glissement dans ladite zone rectiligne de la même fente (3).

7. Dispositif d'assemblage selon la revendication 5 ou 6, **caractérisé en ce que** chaque élément d'accouplement (2) comprend une partie en came (11), positionnée de manière à jouer un rôle de butée en position de blocage.

8. Dispositif d'assemblage selon l'une quelconque des revendications 5 à 7, **caractérisé en ce que** ledit élément d'accouplement (2) est relié, par l'intermédiaire d'une tige (12), à une partie d'entraînement (13) de forme sensiblement aplatie.

9. Dispositif d'assemblage selon la revendication 8, **caractérisé en ce que** le diamètre et le développement axial de ladite tige (12) sont conçus pour pouvoir la positionner précisément entre deux ailes (3a) de ladite fente (3), afin d'obtenir ainsi un blocage stable dudit bloc d'assemblage (1) sur ledit profilé de recouvrement (4).

10. Dispositif d'assemblage selon la revendication 8 ou 9, **caractérisé en ce que** ladite partie d'entraînement (13), sur la partie opposée à celle d'où s'étire ladite tige (12), est reliée audit élément de blocage (15).
